# EUROPEAN PATENT APPLICATION

(11) **EP 4 804 077 A1**
(43) Date of publication of application: **09.09.2026**
(21) Application number: 25382191.2
(22) Date of filing: 03.03.2025
(51) Int. Cl.: G06K 19/077

(54) **CARD BODY WITH A COMPENSATION SPACE**

(71) Applicant: Giesecke+Devrient ePayments GmbH, 81677 München (DE)
(72) Inventor: Illana, Mireia, 08820 El Prat de Llobregat (Barcelona) (ES); Vidal Torres, Pedro, 08820 El Prat de Llobregat (Barcelona) (ES)
(74) Representative: LKGLOBAL Partnerschaftsgesellschaft mbB

(57) **Abstract**

A card body (2) for a chip card (1) with a chip module (3), a method for manufacturing a chip card (1) with a chip module (3), and a chip card (1), in particular a transaction card, comprising a corresponding card body (2), are provided, wherein the card body (2) comprises a cavity (6) extending down from a top face (4) of the card body (2) and configured for receiving the chip module (3) a support surface (16) provided in the cavity (6) for supporting the chip module (3); at least one contact opening (13) arranged in the support surface (16) for establishing an electrical contact between the chip module (3) and an antenna module (10) at least partly embedded in the card body (2); and a compensation space (14) arranged in the support surface (16) and laterally bordering the at least one contact opening (13) for localising connection material and/or heat when electrically connecting the chip module (3) to the antenna module (10).

## Description

### Technical Field

The present disclosure relates to the field of manufacturing chip cards or other portable data carriers comprising a card body carrying an electronic chip module. In particular, the present disclosure relates to a card body for a chip card with a chip module, in particular a transaction card having a chip module enabling electronic transactions, a method for manufacturing a chip card with a chip module, in particular a transaction card having a chip module enabling electronic transactions, and a chip card, in particular a transaction card.

### Background of the Invention

Chip cards, also known as portable data carriers, are known from the state of the art, and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction. Certain functions of the chip card may be carried out in a contactless manner through an antenna module embedded in the card body and connected to the chip module, so that the chip module may be accessed in a contactless manner, for example, by a corresponding terminal, such as a payment terminal, via near field communication (NFC) enabled by the antenna module.

DE 197 03 990 A1, for example, relates to a data medium in the form of a chipcard comprising the card body fitted with an antenna, a chip module containing an integrated circuit and located in a recess provided in the card body. The electric connection between the antenna and the chip module passes through lows in the antenna connections. When manufacturing the inventive data medium, a cavity is engineered inside the body card in which the antenna is at least partially embedded. The chip module is placed into said cavity and glued to the card body, for example with a thermo-activatable glue, thereby establishing an electric connection between the chip module and the antenna inasmuch, for instance, as a conductive glue is used for anticipated application to the free antenna connections. In the preferred embodiment the chip removal is carried out so as to form an oblique cutout.

Chip cards, for example, transaction cards, according to the prior art, as described above, may not fully satisfy all requirements regarding their mechanical and/or electrical stability. The antenna module may be arranged at slightly varying depths in the card body. For example, in some card bodies, the antenna module may be arranged slightly deeper than expected. When then during the manufacturing process, a connection material, such as a soldering paste and/or glue, is added in the region of the contact openings in order to allow to connect the chip module to the antenna module, that connection material might not be sufficient for providing a reliable mechanical and/or electrical connection.

Hence, during welding, cold soldering may occur, leading to contact breaks at non-pre-terminable points of time. Furthermore, material surrounding the connection, in particular, plastic material, may be burned during the welding process. If then exposed to certain mechanical impacts, in particular re-occurring bending and pressure applied to the chip card, the mechanical as well as possibly an electric connection between the chip module and the antennal module may not last as long as desired. For example, a typical or standard use period of a chip card configured as a transaction card is 3 to 8 years, the end of which may not be reached if the connection between the chip module and the antenna module and/or the card body is damaged due to everyday use in such a way that it renders the chip card dysfunctional at least in part

### Summary of the Invention

It may thus be seen as an object to provide chip cards which can be used until the end of their respective standard use period and preferably beyond. In particular, it may be seen as an object to improve a mechanical and/or electrical connection between the chip module, the antenna module and/or the card body. These objects are at least partly achieved by the subject-matter of the independent claims.

According to an aspect, a card body for a chip card with a chip module, in particular a transaction card having a chip module enabling electronic transactions, is provided, comprising a cavity extending down from a top surface of the card body and configured for receiving the chip module a support surface provided in the cavity for supporting the chip module; at least one contact opening arranged in the support surface for establishing an electrical contact between the chip module and an antenna module at least partly embedded in the card body; and a compensation space arranged in the support surface and laterally bordering the at least one contact opening for localising connection material and/or heat when electrically connecting the chip module to the antenna module.

According to an aspect, a method for manufacturing a chip card with a chip module, in particular a transaction card having a chip module enabling electronic transactions, is provided, the method comprising the steps of forming a cavity extending down from a top surface of the card body and configured for receiving the chip module providing a support surface in the cavity for supporting the chip module; arranging at least one contact opening in the support surface for establishing an electrical contact between the chip module and an antenna module at least partly embedded in the card body; and forming a compensation space in the support surface and laterally bordering the at least one contact opening for localising connection material and/or heat when electrically connecting the chip module to the antenna module.

According to an aspect, a chip card, in particular a transaction card, is provided, comprising a corresponding card body and a chip module connected to the antenna module, and/or at least sectionwise manufactured by a corresponding method.

The proposed solution has the advantage over the prior art, that the compensation space on the one hand allows for compensating certain depth deviations of the antenna module within the card body. On the other hand, the compensation space helps for localising any connection material and/or heat on the bare antenna module. Thereby, a connection between the chip module, in particular antenna connection elements thereof, and the antenna module may be enhanced. As a connection material, for example, an adhesive, such as glue, and/or solder material can be used. The material can flow into the compensation space, thus creating an improved bond between the chip module and the antenna module. This helps in increasing the overall mechanic and/or electric stability of the chip card and hence, its use period.

Further developments can be derived from the dependent claims and from the following description. Features described with reference to a chip card and components thereof may be implemented as method steps, or vice versa. Therefore, the description provided in the context of the chip card and its components applies in an analogous manner also to respective methods. In particular, features and functions of the chip card and of its components may be implemented as method steps of the methods and the method steps may be implemented as respective features or functions, respectively.

According to a possible embodiment, the compensation space at least partly encompasses the at least one contact opening. The compensation space can at least sectionwise edge the at least one contact opening. This further helps in localising the connection material and/or heat on the antenna module.

According to a possible embodiment, the compensation space surrounds the at least one contact opening. In other words, the contact opening may be formed in the compensation space. This further helps in localising the connection material and/or heat on the antenna module.

According to a possible embodiment, the card body further comprises a recess formed in the support surface, wherein the compensation space connects the at least one contact opening with the recess. The compensation space may merge with the recess. This further helps in compensating any manufacturing tolerances.

According to a possible embodiment, the compensation space widens towards the recess. For example, the compensation space can have a cap-shaped contour in a projection along a height direction of the card body. A rounded compensation section of the compensation space may at least in part be shaped in a coaxial manner with respect to the contact opening, while a transition section of the compensation space can extend longitudinally away from the compensation section towards the recess with wall sections extending essentially in parallel to each other, e.g. in parallel to a longitudinal or transverse direction of the card body. This further helps in localising connection material and/or heat in the contact opening, and in compensating manufacturing tolerances.

According to a possible embodiment, the recess at least partially has a depth of 0.34 to 0.42 mm, preferably between 0.36 to 0.4 mm. most preferably around 0.38 mm with respect to the support surface. The depth of the recess may be chosen to provide sufficient space for mounting the chip module in the card body. This can help to facilitate manufacturing of the chip card.

According to a possible embodiment, an intermediate step formed between the support surface and the contact opening at least partly borders the compensation space. The intermediate step can define the compensation space., in particular a bottom thereof. Thereby, the compensation space may be provided in a well reproduceable manner.

According to a possible embodiment, the compensation space at least partly has a depth of between 0.01 to 0.06 mm, preferably between 0.015 to 0.045 mm, most preferably around 0.0025 mm with respect to the support surface. The depth of the compensation space may be chosen to provide the desired compensation effect. For example, the compensation space can extend to an amount of 30% of the support surface. This can help to facilitate manufacturing of the chip card. This can further help in localising connection material and/or heat in the contact opening, and in any manufacturing tolerances.

According to a possible embodiment, the cavity at least partly has a depth of between 0.18 to 0.28 mm, preferably between 0.2 to 0.24 mm, most preferably around 0.22 mm measured between the top surface and the support surface. The depth of the cavity may be chosen to accommodate the chip module in the card body in a manner such that the chip module is aligned with a top surface of the card body. This further helps in enhancing mechanical and/or electrical stability of the chip card.

According to a possible embodiment, the at least one contact opening at least partly has a depth of between 0.1 to 0.18 mm, preferably between 0.12 to 0.16 mm, most preferably around 0.14 mm with respect to the support surface. The at least one contact opening can have a depth between 0.05 to 0.09 mm, preferably between 0.06 to 0.08 mm, most preferably around 0.07 mm with respect to the intermediate step. This can additionally help in localising connection material and/or heat in the contact opening, and in any manufacturing tolerances.

According to a possible embodiment, in an unconnected state, the antenna module at least partially lies bare in the at least one contact opening. The antenna module may comprise a number of antenna elements, e.g. in the form of wire strands which can at least sectionwise extend in parallel to each other, in particular in the region of the at least one contact opening. This can help to enhance a mechanical and/or electrical connection between the chip module and the antenna module.

According to a possible embodiment, the method further comprises the step of forming an intermediate step between the support surface and the contact opening for at least partially providing the compensation space. The intermediate step may be milled. The intermediate step can define the compensation space., in particular a bottom thereof. Thereby, the compensation space may be provided in a well reproduceable manner.

According to a possible embodiment, at least the support surface and the compensation space are being formed in the same milling work step. For example, the support surface and the compensation space may be formed in the same workstation and/or with the same milling tool. This helps to facilitate to provide the compensation space in a precise manner.

According to a possible embodiment, the at least one contact opening is being formed in an additional milling work step. A further workstation and/or tool may be used to provide the contact opening. This helps to facilitate to provide the contact opening in a precise manner.

### Brief Description of the Drawings

- Fig. 1: is a schematic top view of a chip card comprising a card body and a chip module.
- Fig. 2: is a schematic top view of the chip card illustrated in Fig. 1 before the chip module is mounted to the card body.
- Fig. 3: is a schematic top view of a cavity of the chip card shown in Figs. 1 and 2.
- Fig. 4: is a schematic detail III of the cavity illustrated in Fig. 3.
- Fig. 5: is a schematic cross-sectional view of the detail of the cavity shown in Fig. 4 along a cross-sectional line A-A depicted therein.

### Detailed Description of Embodiments

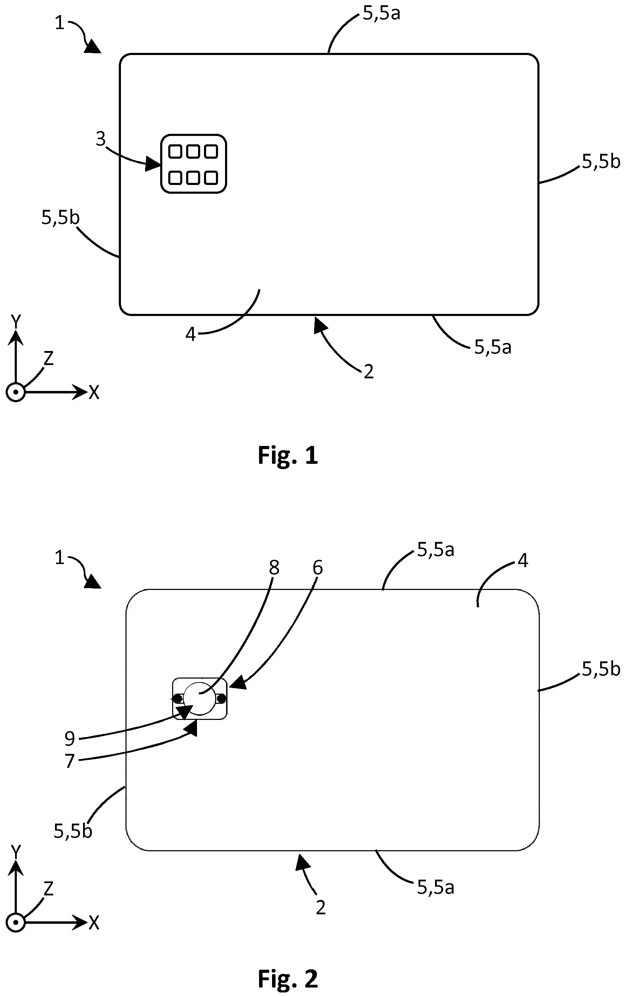

Fig. 1 shows a schematic top view of a chip card 1 comprising a card body 2 and a chip module 3. The chip card 1 extends in a longitudinal direction X, a transverse direction Y, and a height direction Z, together forming a Cartesian coordinate system. A top face 4 of the chip card 1 faces in the height direction Z. Lateral side faces 6 of the chip card 1, namely, longitudinal side faces 5a and transverse side faces 5b, extent essentially in parallel to the longitudinal direction X and the transverse direction Y, respectively.

Fig. 2 shows a schematic top view of the chip card 1 illustrated in Fig. 1 before the chip module 3 is mounted to the card body 2. The chip module 3 is supposed to be received in a cavity 6 formed in the card body 2. The cavity 6 comprises a receiving opening 7, a recess 8 and installation opening 9. The receiving opening 7 can be regarded as an opening towards the entire cavity 6 and has an essentially rectangular or TV screen shape in a projection against the height direction Z and is provided with rounded corners. The installation opening 8 has an essentially round or elliptical shape in a projection against the height direction Z and opens towards the recess 8 offering an installation space for receiving wiring (not shown) for the chip module 3.

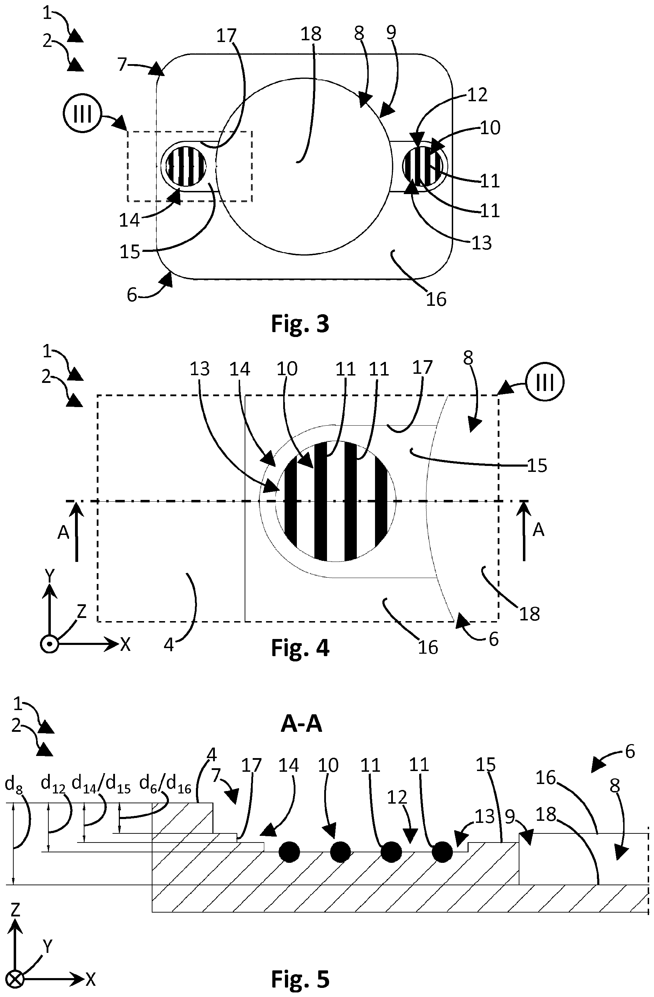

Fig. 3 shows is a schematic top view of a cavity 6 of the chip card 1 shown in Figs. 1 and 2. The chip card 1 further comprises an antenna module 10 with antenna elements 11, for example, in the form of wire strands. The antenna module 10 is arranged at the bottom of a bore 12, for example, in the form of a blind hole, and accessible through a contact opening 13. A compensation space 14 is formed around the contact opening 13 to help localise contact material, such as soldering material, and heat at the contact opening when connecting the chip module 3 to the antenna module 10.

According to the present example, the compensation space 14 is provided by forming an intermediate step 15 in a support surface 16 at least partially forming a bottom of the cavity 6. Side walls 17 of the compensation space 14 are formed such that the compensation space encompasses the contact opening 13 with a rounded section and/or semi-circular section of the compensation space 14 and opens towards the recess 8 with a straight section of the compensation space 14.

Fig. 4 shows is a schematic detail III of the cavity 6 illustrated in Fig. 3. Fig. 5 shows is a schematic cross-sectional view of the detail of the cavity 6 shown in Fig. 4 along a cross-sectional line A-A depicted therein. Here it becomes apparent that the antenna elements 11 of the antenna module 10 lie bare in the bore 12 such that they can be electrically and/or mechanically be connected to the chip module 3. According to the present example, with reference to the top face 4 of the card body 2, and measured essentially in parallel to the height direction Z, a depth d₆ of the cavity 6 may amount to around 0.22 mm (corresponding to a depth d₁₆ of the support surface 16) depending on other depths, a depth d₈ of the recess 8 may amount to around 0.6 mm or more, a depth d₁₂ of bore 12 may amount to 0.36 mm, and/or a depth d₁₄ of the compensation space 14 (corresponding to a depth d₁₅ of the intermediate step) may amount to 0.21 to 0.29 mmm preferably 0.23 to 0.27 mm, most preferably around 0.25 mm.

The subject matter disclosed herein can be implemented in or with software in combination with hardware and/or firmware. For example, the subject matter described herein can be implemented in or with software executed by a processor or processing unit. In one example implementation, the subject matter described herein can be implemented using a computer readable medium having stored thereon computer executable instructions that when executed by a processor of a computer control the computer to perform steps. Example computer readable mediums suitable for implementing the subject matter described herein include non-transitory devices, such as disk memory devices, chip memory devices, programmable logic devices, and application specific integrated circuits. In addition, a computer readable medium that implements the subject matter described herein can be located on a single device or computing platform or can be distributed across multiple devices or computing platforms.

While at least one example embodiment of the invention(s) is disclosed herein, it should be understood that modifications, substitutions and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of Reference Signs

- 1: chip card
- 2: card body
- 3: chip module
- 4: top face
- 5: lateral side face
- 5a: longitudinal side face
- 5b: transverse side face
- 6: cavity
- 7: receiving opening
- 8: recess
- 9: installation opening
- 10: antenna module
- 11: antenna element
- 12: bore / blind hole
- 13: contact opening
- 14: compensation space
- 15: intermediate step
- 16: support surface
- 17: side wall
- 18: bottom of cavity/recess

- d₆: depth of cavity
- d₈: depth of recess
- d₁₂: depth of bore
- d₁₄: depth of compensation space
- d₁₅: depth of intermediate step
- d₁₆: depth of support surface

- X: longitudinal direction
- Y: transverse direction
- Z: height direction

## Claims

1. Card body (2) for a chip card (1) with a chip module (3), in particular a transaction card having a chip module (3) enabling electronic transactions, comprising
a cavity (6) extending down from a top face (4) of the card body (2) and configured for receiving the chip module (3)
a support surface (16) provided in the cavity (6) for supporting the chip module (3);
at least one contact opening (13) arranged in the support surface (16) for establishing an electrical contact between the chip module (3) and an antenna module (10) at least partly embedded in the card body (2); and
a compensation space (14) arranged in the support surface (16) and laterally bordering the at least one contact opening (13) for localising connection material and/or heat when electrically connecting the chip module (3) to the antenna module (10).

2. Card body (2) according to claim 1, wherein the compensation space (14) at least partly encompasses the at least one contact opening (13).

3. Card body (2) according to claim 1 or 2, wherein the compensation space (14) surrounds the at least one contact opening (13).

4. Card body (2) according to at least one of claims 1 to 3, further comprising a recess (8) formed in the support surface (16), wherein the compensation space (14) connects the at least one contact opening (13) with the recess (8), and/or wherein the compensation space (14) widens towards the recess (8).

5. Card body (2) according to claim 4, wherein the recess (8) at least partially has a depth of 0.34 to 0.42 mm, preferably between 0.36 to 0.4 mm. most preferably around 0.38 mm with respect to the support surface.

6. Card body (2) according to at least one of claims 1 to 5, wherein an intermediate step (15) formed between the support surface (16) and the contact opening (13) at least partly borders the compensation space (14).

7. Card body (2) according to at least one of claims 1 to 6, wherein the compensation space (14) at least partly has a depth of between 0.01 to 0.06 mm, preferably between 0.015 to 0.045 mm, most preferably around 0.025 mm with respect to the support surface (16).

8. Card body (2) according to at least one of claims 1 to 7, wherein the cavity (6) at least partly has a depth of between 0.18 to 0.28 mm, preferably between 0.2 to 0.24 mm, most preferably around 0.22 mm measured between the top face (4) and the support surface (16).

9. Card body (2) according to at least one of claims 1 to 8, wherein the at least one contact opening (13) at least partly has a depth of between 0.1 to 0.18 mm, preferably between 0.12 to 0.16 mm, most preferably around 0.14 mm with respect to the support surface (16).

10. Card body (2) according to at least one of claims 1 to 9, wherein in an unconnected state, the antenna module (10) at least partially lies bare in the at least one contact opening (13).

11. Method for manufacturing a chip card (1) with a chip module (3), in particular a transaction card having a chip module enabling electronic transactions, the method comprising the steps of
forming a cavity (6) extending down from a top face (4) of the card body (2) and configured for receiving the chip module (3)
providing a support surface (16) in the cavity (6) for supporting the chip module (3);
arranging at least one contact opening (13) in the support surface (16) for establishing an electrical contact between the chip module (3) and an antenna module (10) at least partly embedded in the card body (2); and
forming a compensation space (14) in the support surface (16) and laterally bordering the at least one contact opening (13) for localising connection material and/or heat when electrically connecting the chip module (3) to the antenna module (10).

12. Method according to claim 11, further comprising the step of forming an intermediate step (15) between the support surface (16) and the contact opening (13) for at least partially providing the compensation space (14).

13. Method according to claim 11 or 12, wherein at least the support surface (16) and the compensation space (14) are being formed in the same milling work step.

14. Method according to claim 13, wherein the at least one contact opening (13) is being formed in an additional milling work step.

15. Chip card (1), in particular a transaction card, comprising a card body (2) according to at least one of claims 1 to 10 and a chip module (3) connected to the antenna module (10), and/or at least sectionwise manufactured by a method according to at least one of claims 11 to 14.
